(19) Europäisches Patentamt

European Patent Office

Office européen des brevets

(11) **EP 0 573 034 B1**

(12) **EUROPÄISCHE PATENTSCHRIFT**

(45) Veröffentlichungstag und Bekanntmachung des Hinweises auf die Patenterteilung:
**08.07.1998   Patentblatt 1998/28**

(51) Int Cl.6: **G01S 7/52**, G01S 15/52

(21) Anmeldenummer: **93108932.0**

(22) Anmeldetag: **03.06.1993**

(54) **Verfahren und Anordnung zur Abstandsmessung nach dem Impulslaufzeitprinzip**

Method and apparatus for distance measurement using the transit time of pulses

Méthode et appareil de télémétrie au moyen de mesure de temps de parcours d'impulsions

(84) Benannte Vertragsstaaten:
**CH DE ES FR GB IT LI NL SE**

(30) Priorität: **03.06.1992   DE 4218303**

(43) Veröffentlichungstag der Anmeldung:
**08.12.1993   Patentblatt 1993/49**

(73) Patentinhaber: **ENDRESS + HAUSER GMBH + CO.**
**D-79689 Maulburg (DE)**

(72) Erfinder:
• **Elle, André**
  **D-7856 Rümmingen (DE)**

• **Schmidt, Hartmut**
  **D-79576 Weil am Rhein (DE)**

(74) Vertreter: **Leiser, Gottfried, Dipl.-Ing. et al**
**Prinz & Partner,**
**Manzingerweg 7**
**81241 München (DE)**

(56) Entgegenhaltungen:
**DE-A- 4 014 198**          **GB-A- 2 050 022**
**US-A- 4 596 144**          **US-A- 4 890 266**

**Beschreibung**

Die Erfindung betrifft ein Verfahren zur Abstandsmessung nach dem Impulslaufzeitprinzip, bei welchem in aufeinanderfolgenden Meßzyklen jeweils während einer Sendephase ein Impuls ausgesendet wird und in einer sich an die Sendephase anschließenden Empfangsphase das Empfangssignal als Echoprofil gespeichert wird, bei welchem aus wenigstens einem gespeicherten Echoprofil das an dem zu messenden Objekt reflektierte Nutzecho ermittelt wird und der Abstand des Objekts aus dem Zeitabstand zwischen der Aussendung des Impulses und dem Empfang des Nutzechos bestimmt wird, wobei zur Unterdrückung von Störsignalen aus einem gespeicherten Echoprofil ein Gleitschwellenprofil dadurch gebildet wird, daß das Echoprofil durch Glättung derart von Schwankungen befreit wird, daß das Ergebnis eine monoton fallende Kurve ist, und bei welchem das Gleitschwellenprofil mit einem der Meßumgebung zur Unterdrückung wiederkehrender Störsignale angepaßten Festschwellenprofil kombiniert wird und das resultierende Schwellensignal bei jeder Auswertung von gespeicherten Echoprofilen angewendet wird.

Bei einem aus der US-A-4 890 266 bekannten Verfahren dieser Art, das speziell für die Messung des Füllstands in einem Behälter mittels Ultraschallimpulsen ausgebildet ist, besteht das Gleitschwellenprofil nur aus zwei geraden Strecken, nämlich einer linear abfallenden Strecke im Ausschwingbereich des die Sendeimpulse erzeugenden Ultraschallwandlers und aus einer sich anschließenden horizontalen Strecke. Der Übergang zwischen diesen beiden Strecken wird dadurch gefunden, daß zunächst ein linearer Abfall bis zu der Stelle gemacht wird, an der das Echoprofil horizontal wird, und daß anschließend die horizontale Linie bis zum Schnittpunkt mit der linear abfallenden Strecke rückwärts verlängert wird. Das auf diese Weise erhaltene Gleitschwellenprofil ist nur eine sehr grobe Annäherung an das gespeicherte Echoprofil. Ferner besteht bei diesem bekannten Verfahren ein Problem, wenn es zur Messung des Füllstands in einem Behälter angewendet wird. In diesem Fall wird nämlich ein Echoprofil nur für den Bereich zwischen dem Sende- und Empfangsstrahler und der Füllgutoberfläche erhalten. Die Bildung des Gleitschwellenprofils ist mit dem bekannten Verfahren jedoch nur dann möglich, wenn ein Echoprofil mindestens bis zu der Stelle vorhanden ist, an der es in den horizontalen Verlauf übergeht. Die Bildung des Gleitschwellenprofils ist daher nicht möglich, wenn der Füllstand im Behälter höher als diese Stelle ist.

Aufgabe der Erfindung ist demgegenüber die Schaffung eines Verfahrens der eingangs angegebenen Art, das für jeden nutzbaren Meßbereich ein Gleitschwellenprofil in Form einer monoton fallenden Kurve ergibt, die sehr gut an den Verlauf des Echoprofils angepaßt ist.

Nach der Erfindung wird diese Aufgabe dadurch gelöst, daß die Werte des Gleitschwellenprofils für aufeinanderfolgende Zeitpunkte des Meßzyklus aus Werten des gespeicherten Echoprofils gebildet werden und daß zur Erzielung der monoton fallenden Kurve für jeden einem Zeitpunkt des Meßzyklus entsprechenden Wert des Gleitschwellenprofils der für diesen Zeitpunkt gebildete Wert verwendet wird, wenn er kleiner als der für den vorhergehenden Zeitpunkt verwendete Wert oder gleich diesem Wert ist, und andernfalls der für den vorhergehenden Zeitpunkt verwendete Wert verwendet wird.

Eine Ausführungsform des erfindungsgemäßen Verfahrens besteht darin, daß zur Glättung des Echoprofils für jeden Wert des Gleitschwellenprofils der Mittelwert von mehreren aufeinanderfolgenden Werten des Echoprofils gebildet wird.

Eine andere Ausführungsform des erfindungsgemäßen Verfahrens besteht darin, daß aus dem Echoprofil in Abständen liegende Stützwerte des Gleitschwellenprofils ermittelt werden und daß die zwischen den Stützwerten liegenden Werte des Gleitschwellenprofils durch lineare Interpolation gebildet werden. In diesem Fall können die Abstände zwischen den Stützwerten im zeitlichen Verlauf des Meßzyklus fortlaufend vergrößert werden, beispielsweise jeweils um den Faktor 2. Auch in diesem Fall kann zur Bildung jedes Stützwertes der Mittelwert von mehreren aufeinanderfolgenden Werten des Echoprofils gebildet werden.

Eine Anordnung zur Durchführung des erfindungsgemäßen Verfahrens mit einer Sende-Empfangs-Einrichtung zur Aussendung eines Sendeimpulses in jedem Meßzyklus und zum Empfang der aufgrund jedes Sendeimpulses eintreffenden Echosignale sowie mit einer an die Sende-Empfangs-Einrichtung angeschlossenen Signalverarbeitungsschaltung mit einem Echoprofilspeicher, in dem wenigstens ein Echoprofil gespeichert ist, das dem von der Sende-Empfangs-Einrichtung im Verlauf eines Meßzyklus gelieferten Empfangssignal entspricht, mit einer Auswerteschaltung, die aus dem im Echoprofilspeicher gespeicherten Echoprofil das an dem zu messenden Objekt reflektierte Nutzecho ermittelt und den Abstand des Objekts aus dem Zeitabstand zwischen der Aussendung des Impulses und dem Empfang des Nutzechos bestimmt, und mit einer Gleitschwellenprofilschaltung zur Bildung eines geglätteten und monoton fallenden Gleitschwellenprofils aus einem gespeicherten Echoprofil ist nach der Erfindung dadurch gekennzeichnet, daß die Gleitschwellenprofilschaltung ein Kleinstwertfilter enthält, das jeden für einen bestimmten Zeitpunkt des Meßzyklus gebildeten Wert des Gleitschwellenprofils mit dem für den vorhergehenden Zeitpunkt gebildeten Wert vergleicht und den kleineren der beiden verglichenen Werte oder, falls die beiden verglichenen Werte gleich sind, diesen Wert als den für diesen Zeitpunkt gebildeten Wert des Gleitschwellenprofils abgibt.

Ausgestaltungen und Weiterbildungen der Anordnung zur Durchführung des erfindungsgemäßen Verfahrens sind in den Unteransprüchen gekennzeichnet.

Ausführungsbeispiele der Erfindung werden nachfolgend anhand der Zeichnungen erläutert. In den Zeichnungen zeigen:

Fig. 1      das Blockschema einer Anordnung zur Messung des Füllstands in einem Behälter mittels Ultraschallimpulsen,

Fig. 2, 3      Diagramme von bei der Anordnung von Fig. 1 auftretenden Echoprofilen in Verbindung mit einem Festschwellenprofil nach dem Stand der Technik,

Fig. 4, 5      Diagramme der in Fig. 2 bzw. Fig. 3 dargestellten Echoprofile in Verbindung mit den gemäß der Erfindung angewendeten Schwellenprofilen,

Fig. 6      ein erstes Ausführungsbeispiel der in der Anordnung von Fig. 1 verwendeten Gleitschwellenprofilschaltung,

Fig. 7      ein Ausführungsbeispiel des in der Gleitschwellenprofilschaltung von Fig. 5 verwendeten Kleinstwertfilters und

Fig. 8      ein zweites Ausführungsbeispiel der in der Anordnung von Fig. 1 verwendeten Gleitschwellenprofilschaltung.

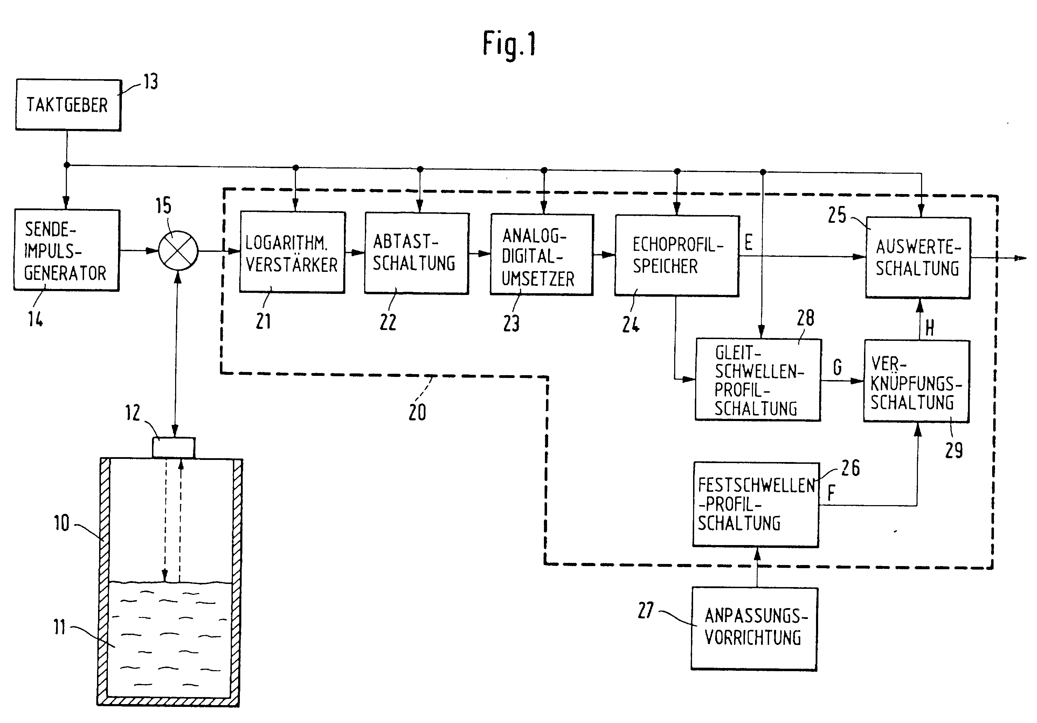

Fig. 1 zeigt als Beispiel für die Abstandsmessung nach dem Impulslaufzeitverfahren eine Anordnung zur Messung des Füllstands in einem Behälter 10, der ein Füllgut 11 enthält. An der Oberseite des Behälters 10 ist oberhalb des höchsten vorkommenden Füllstands ein Ultraschallwandler 12 angeordnet, der abwechselnd als Sendewandler und als Empfangswandler arbeitet. In der Sendephase wird der Ultraschallwandler 12 durch ein elektrisches Signal erregt, so daß er einen Ultraschallimpuls erzeugt, der senkrecht nach unten auf das im Behälter befindliche Füllgut 11 gerichtet ist. In der Empfangsphase empfängt der Ultraschallwandler 12 das an der Oberfläche des Füllguts 11 reflektierte Echosignal, das er in ein elektrisches Signal umwandelt. Eine Sendephase und eine Empfangsphase bilden zusammen einen Meßzyklus. Ein Taktgeber 13 steuert die zeitliche Aufeinanderfolge der Meßzyklen und den zeitlichen Ablauf der Vorgänge innerhalb jedes Meßzyklus.

Ein vom Taktgeber 13 am Beginn jedes Meßzyklus ausgelöster Sendeimpulsgenerator 14 erzeugt während der Sendephase das für die Erzeugung des Ultraschallwandlers 12 erforderliche impulsförmige elektrische Signal mit der Frequenz der auszusendenden Ultraschallwelle. Dieses Signal wird dem Ultraschallwandler 12 über eine Sende-Empfangs-Weiche 15 zugeführt. Alle nach dem Aufhören des Sendeimpulses am Ultraschallwandler 12 eintreffenden Ultraschallsignale werden von diesem in ein elektrisches Empfangssignal umgesetzt, das über die Sende-Empfangs-Weiche 15 einer Signalverarbeitungsschaltung 20 zugeführt wird. Zu diesen empfangenen Ultraschallsignalen gehört insbesondere auch der Nutzechoimpuls, der an der Oberfläche des Füllguts 11 reflektiert wird und dessen Laufzeit vom Ultraschallwandler 12 zur Füllgutoberfläche und wieder zurück zum Ultraschallwandler 12 gemessen werden soll. Aus dieser Laufzeit läßt sich der Abstand der Füllgutoberfläche vom Ultraschallwandler 12 und damit der Füllstand im Behälter 10 bestimmen.

Zu den vom Ultraschallwandler 12 empfangenen Ultraschallsignalen gehören außer dem Nutzechoimpuls auch verschiedene Störsignale, insbesondere Störechosignale, die an anderen Oberflächen reflektiert werden, beispielsweise an festen Einbauten in Behälter, an Füllgut, das in den Behälter fällt, usw.. Eine wesentliche Aufgabe der Signalverarbeitungsschaltung 20 besteht darin, den Nutzechoimpuls aus der Gesamtheit der empfangenen Ultraschallsignale herauszufinden, damit nicht ein falsches Ultraschallsignal als Nutzechoimpuls interpretiert und zur Laufzeitmessung verwendet wird.

Die Signalverarbeitungsschaltung 20 enthält einen logarithmischen Verstärker 21, dem das vom Ultraschallwandler 12 erzeugte elektrische Empfangssignal über die Frequenzweiche 15 zugeführt wird. Dem logarithmischen Verstärker 21 ist eine vom Taktgeber 13 gesteuerte Abtastschaltung 22 nachgeschaltet, die aus dem Ausgangssignal des logarithmischen Verstärkers im Verlauf jeder Empfangsphase eine Reihe von Abtastwerten entnimmt, die vorzugsweise in gleichen Zeitabständen liegen. Jeder Abtastwert hat die Amplitude des logarithmisch verstärkten Empfangssignals im Abtastzeitpunkt. Ein der Abtastschaltung nachgeschalteter Analog-Digital-Umsetzer 23 setzt jeden Abtastwert in eine digitale Codegruppe um, die eine Zahl darstellt, deren Zahlenwert der Amplitude des Abtastwerts entspricht. Die Amplitudenauflösung ist durch die Stellenzahl der digitalen Codegruppe bestimmt. Wenn beispielsweise jeder Abtastwert durch den Analog-Digital-Umsetzer 23 in eine binäre Bitgruppe mit acht Bits umgesetzt wird, können $2^8 = 256$ Amplitudenwerte unterschieden werden. Die Zeitauflösung ist durch den Zeitabstand der von der Abtastschaltung 22 entnommenen Abtastwerte bestimmt.

Die vom Analog-Digital-Umsetzer 23 im Verlauf jeder Empfangsphase nacheinander gelieferten digitalen Codegruppen werden in einen Echoprofilspeicher 24 eingegeben und dort gespeichert. Die Kapazität des Echoprofilspeichers 24 ist mindestens so groß, daß alle während eines Meßzyklus gelieferten digitalen Codegruppen gespeichert werden können. Diese gespeicherten Codegruppen stellen das Echoprofil des Behälters 10 im Verlauf des gesamten Meßzyklus dar. In manchen Fällen ist die Kapazität des Echoprofilspeichers auch wesentlich größer, so daß die in mehreren aufeinanderfolgenden Meßzyklen erhaltenen Echoprofile gespeichert und gemeinsam ausgewertet werden können.

Eine mit dem Echoprofilspeicher 24 verbundene Auswerteschaltung 25 hat die Aufgabe, in dem im Echoprofilspeicher 24 gespeicherten Echoprofil das an der Füllgutoberfläche reflektierte Nutzecho zu erkennen, die Laufzeit des Nutzechos zu bestimmen und aus dieser Laufzeit den Füllstand im Behälter zu berechnen. Die Auswerteschaltung gibt am Ausgang ein Signal ab, das den Füllstand im Behälter darstellt.

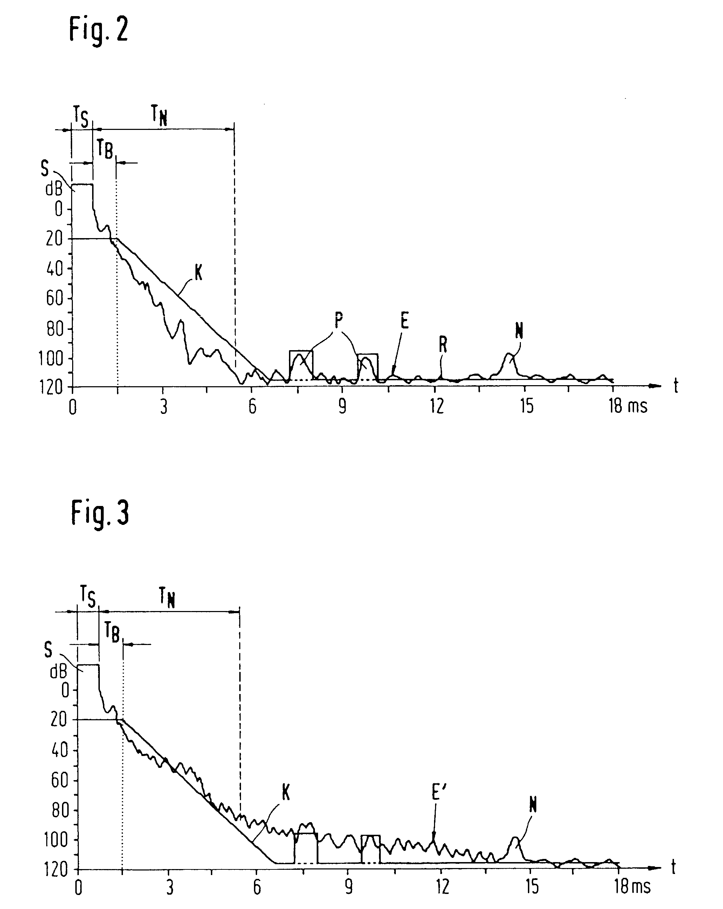

Fig. 2 zeigt ein Beispiel für ein im Echoprofilspeicher 24 gespeichertes Echoprofil E. Es stellt den Amplitudenverlauf der im Verlauf eines Meßzyklus abgetasteten und digitalisierten Empfangssignale als Funktion der Zeit t dar. Im Zeitpunkt t = 0 beginnt die Erregung des Ultraschallwandlers 12 durch den vom Sendeimpulsgenerator 14 erzeugten Sendeimpuls S, der die Dauer $T_S$ hat und mit großer Amplitude zum Eingang des logarithmischen Verstärkers 21 gelangt. Nach dem Ende des Sendeimpulses S schwingt der Ultraschallwandler 12 noch eine gewisse Zeit $T_N$ nach; in dieser Zeit fällt das Echoprofil exponentiell von dem hohen Sendepegel auf den niedrigen Empfangspegel ab. Um eine Übersteuerung des Verstärkers 21 durch den Sendeimpuls S zu verhindern, wird der Verstärker 21 für die Dauer $T_S$ des Sendeimpulses S und für eine sich an des Ende des Sendeimpulses anschließende Zeit $T_B$ blockiert, bis der Empfangspegel auf einen vorbestimmten Wert abgefallen ist, der bei dem in Fig. 2 dargestellten Beispiel 20 dB beträgt. Während dieser Dauer $T_B$ ist keine Auswertung von Empfangssignalen und daher auch keine Abstandsmessung möglich; der der Blockierung des Verstärkers 21 entsprechende Mindestabstand, ab dem eine Abstandsmessung überhaupt erst möglich ist, wird daher als "Blockdistanz" bezeichnet. Die Blockdistanzzeit $T_B$ kann gleich der gesamten Nachschwingdauer $T_N$ oder, wie in Fig. 2 dargestellt, auch kürzer als diese sein.

In der sich an das Ende der Nachschwingdauer $T_N$ anschließenden Empfangsphase gibt das Echoprofil das Rauschen R wieder, dem Störechos P überlagert sind, die von anderen Reflexionsflächen als der Füllgutoberfläche stammen, beispielsweise von festen Einbauten im Behälter. Schließlich erscheint im Echoprofil das von der Füllgutoberfläche reflektierte Nutzecho N, das gewöhnlich daran zu erkennen ist, daß es bei vorgegebener Mindestdauer eine größere Amplitude als die übrigen Komponenten des Echoprofils hat. Starke Störimpulse, deren Amplituden von gleicher Größenordnung wie diejenigen des Nutzechos sind, können gewöhnlich aufgrund der wesentlich kürzeren Impulsdauer vom Nutzecho unterschieden werden.

Um zu verhindern, daß die Auswerteschaltung 25 irrtümlich eines der von festen Einbauten stammenden Störechos P als Nutzecho interpretiert, ist es bekannt, ein dem Echoprofil entsprechendes Festschwellenprofil aufzuzeichnen, das an die Störverhältnisse in dem Behälter 10 einmalig angepaßt wird. Fig. 2 zeigt als Beispiel ein solches Festschwellenprofil K bekannter Art. Zur Bildung des Festschwellenprofils K wird üblicherweise eine dem mittleren Verlauf des Echoprofils folgende geglättete Kurve erzeugt, die gegenüber dem Echoprofil derart nach oben verschoben ist, daß sie von den durch das Nachschwingen verursachten Komponenten und von den normalerweise vorhandenen Rauschsignal-Komponenten des Echoprofils nicht überschritten wird. Diese Kurve wird in ausgewählten Bereichen zusätzlich verändert, um stets wiederkehrende bekannte Störechos P, die das mittlere Schwellenprofil übersteigen würden, gleichfalls zu unterdrücken. Diese Anpassung kann beispielsweise von Hand durch eine Bedienungsperson erfolgen.

Nach dem Stand der Technik wird das Festschwellenprofil K der Auswerteschaltung 25 bei jeder Auswertung eines Echoprofils zugeführt. Die Auswerteschaltung 25 prüft dann nur diejenigen gespeicherten digitalen Codegruppen des Echoprofils, deren Amplitudenwerte größer als die Amplitudenwerte der den gleichen Zeitpunkten zugeordneten digitalen Codegruppen des Festschwellenprofils sind. Somit bleiben alle Komponenten des Echoprofils E, die in dem Diagramm von Fig. 2 das Festschwellenprofil K nicht übersteigen, von der Auswertung ausgeschlossen. Dadurch wird verhindert, daß eines der Störechos P fälschlicherweise als Nutzecho interpretiert wird.

Das bisher beschriebene Verfahren arbeitet einwandfrei, solange sich die akustischen Verhältnisse im Behälter 10 nicht wesentlich ändern. Das gesamte Echoprofil kann jedoch infolge von Änderungen der Absorption, der Ausbreitungsverluste, der Reflexionsbedingungen, von Störgeräuschen usw. beträchtlichen Schwankungen unterworfen sein. Das herkömmliche Festschwellenprofil K berücksichtigt solche Veränderungen der Meßbedingungen nicht, bis es neu erstellt und angepaßt wird. Fig. 3 zeigt als Beispiel wieder das Festschwellenprofil K von Fig. 2 sowie das Echoprofil E' mit dem gleichen Nutzecho N wie in Fig. 2, dem jedoch ein starkes Störgeräusch überlagert ist. Dieses Störgeräusch hat zur Folge, daß nahezu alle gespeicherten Abtastwerte des Echoprofils E' das Festschwellenprofil K übersteigen und somit in der Auswerteschaltung 25 zur Erkennung des Nutzsignals N ausgewertet werden. Dies erhöht die Gefahr, daß eine falsche Impulsspitze des Echoprofils irrtümlich als Nutzsignal angesehen wird.

Zur selbsttätigen Anpassung an solche Änderungen des Echoprofils wird bei der Signalverarbeitungsschaltung 20 von Fig. 1 das der Auswerteschaltung 25 zugeführte Schwellenprofil durch Verknüpfung eines Festschwellenprofils F mit einem Gleitschwellenprofil G gebildet. Das Festschwellenprofil F ist, ähnlich wie das Echoprofil E im Echoprofilspeicher 24, in Form von digitalen Codegruppen in einer Festschwellenprofilschaltung 26 gespeichert. Es unterscheidet sich jedoch von dem herkömmlichen Festschwellenprofil K von Fig. 2 und 3 dadurch, daß es nur zur Unterdrückung der stets wiederkehrenden Störechos P ausgebildet ist. Die erforderliche Anpassung an die jeweils herrschenden Störverhältnisse im Behälter kann mittels einer Anpassungsvorrichtung 27 erfolgen, beispielsweise von Hand durch eine Bedienungsperson. Ferner enthält die Signalverarbeitungsschaltung 20 von Fig. 1 zusätzlich eine Gleitschwellenprofilschaltung 28, die aus den im Echoprofilspeicher 24 gespeicherte Echoprofilen ein Gleitschwellenprofil G erzeugt, das in einer Verknüpfungsschaltung 29 mit dem von der Schaltung 26 gelieferten Festschwellenprofil F verknüpft wird. Zur Bildung des Gleitschwellenprofils G wird das Echoprofil E mittels eines Glättungsfilters von Schwankungen befreit. Die Glättung wird so vorgenommen, daß ihr Ergebnis eine monoton fallende Kurve ist, die ebenfalls in Form von digitalen Codegruppen in der Gleitschwellenprofilschaltung 28 gespeichert wird. Die Verknüpfung erfolgt in der Weise, daß die den gleichen Zeitpunkten entsprechenden Amplitudenwerte des Festschwellenprofils F und des Gleitschwellenprofils G miteinander verglichen werden; der größere der beiden Werte wird in der Verknüpfungsschaltung 29 gespeichert. Die Gesamtheit der auf diese Weise in der Verknüpfungsschaltung 29 gespeicherten digitalen Codegruppen ergibt ein resultierendes Schwellenprofil H, das der Auswerteschaltung 25 zugeführt wird.

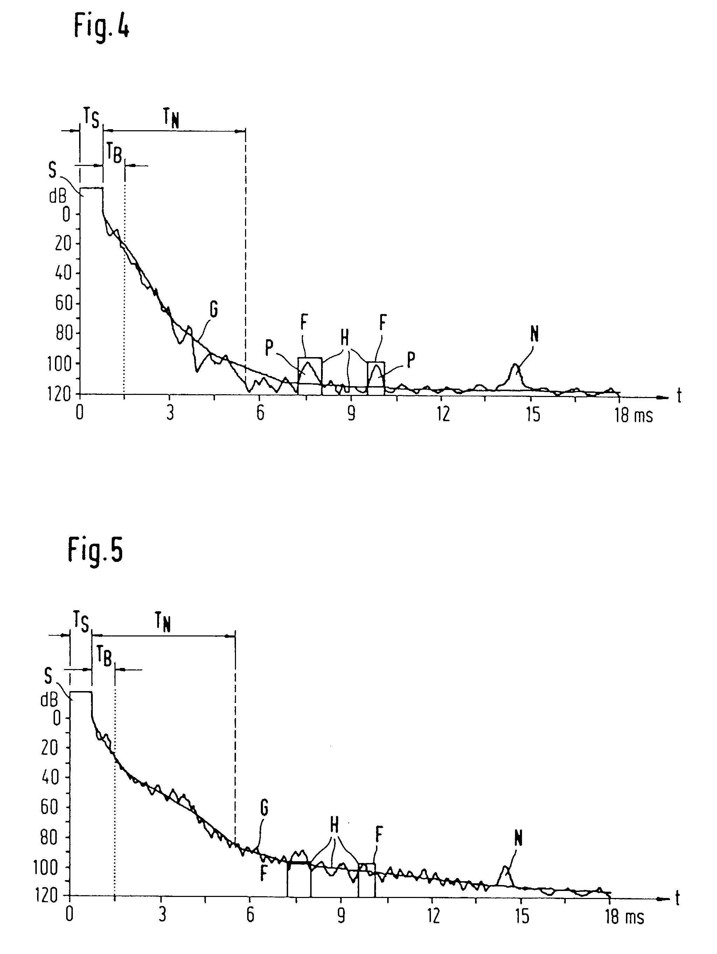

Das Ergebnis dieser Maßnahmen ist in den Figuren 4 und 5 dargestellt. Fig. 4 zeigt wieder das Echoprofil E von Fig. 2 sowie das in der Festschwellenprofilschaltung 26 gespeicherte Festschwellenprofil F, das in der Gleitschwellenprofilschaltung 28 gespeicherte Gleitschwellenprofil G und das durch die Verknüpfung der Schwellenprofile F und G in der Verknüpfungsschaltung 29 erhaltene resultierende Schwellenprofil H, das der Auswerteschaltung 25 zugeführt wird. Das Festschwellenprofil F besteht nur aus den Rechteckzacken an den Stellen der wiederkehrenden Störechos P. Das Gleitschwellenprofil G folgt dem Verlauf des Echoprofils in Form einer monoton fallenden Kurve, die etwa in der Mitte zwischen den größten und den kleinsten Störspitzen verläuft. Das resultierende Schwellenprofil H entspricht an den Stellen der Störechos P dem Festschwellenprofil F und im übrigen dem Gleitschwellenprofil G. Infolge des monoton fallenden Verlaufs geht das Gleitschwellenprofil G an den Stellen der Störechos P und des Nutzechos N nicht wieder nach oben, so daß sich diese Echos deutlich vom Gleitschwellenprofil G abheben. Da jedoch die Störechos P auf jeden Fall durch das Festschwellenprofil F unterdrückt werden, wird nur das Nutzecho N erkannt und ausgewertet. Die Auswerteschaltung 25 ist natürlich so ausgebildet, daß sie die das resultierende Schwellenprofil H überschreitenden Stör- und Rauschsignalspitzen ignoriert; als Bezugslinie für die auszuwertende Amplitude des Echoprofils E wird nicht die Grundlinie (t-Achse), sondern das resultierende Schwellenprofil H verwendet, und die Auswerteschaltung erkennt dasjenige Echo, das diese Bezugslinie am weitesten überschreitet, als das Nutzecho.

Fig. 5 zeigt in entsprechender Weise die Schwellenprofile F, G und H für den Fall des Echoprofils E' von Fig. 3. Das Festschwellenprofil F hat den gleichen Verlauf wie in Fig. 4. Das Gleitschwellenprofil G folgt dem Verlauf des geänderten Echoprofils E' und unterscheidet sich daher beträchtlich von dem Gleitschwellenprofil von Fig. 4. Infolge des monoton fallenden Verlaufs des Gleitschwellenprofils G hebt sich auch in diesem Fall das Nutzecho N deutlich von dem resultierenden Schwellenprofil H ab.

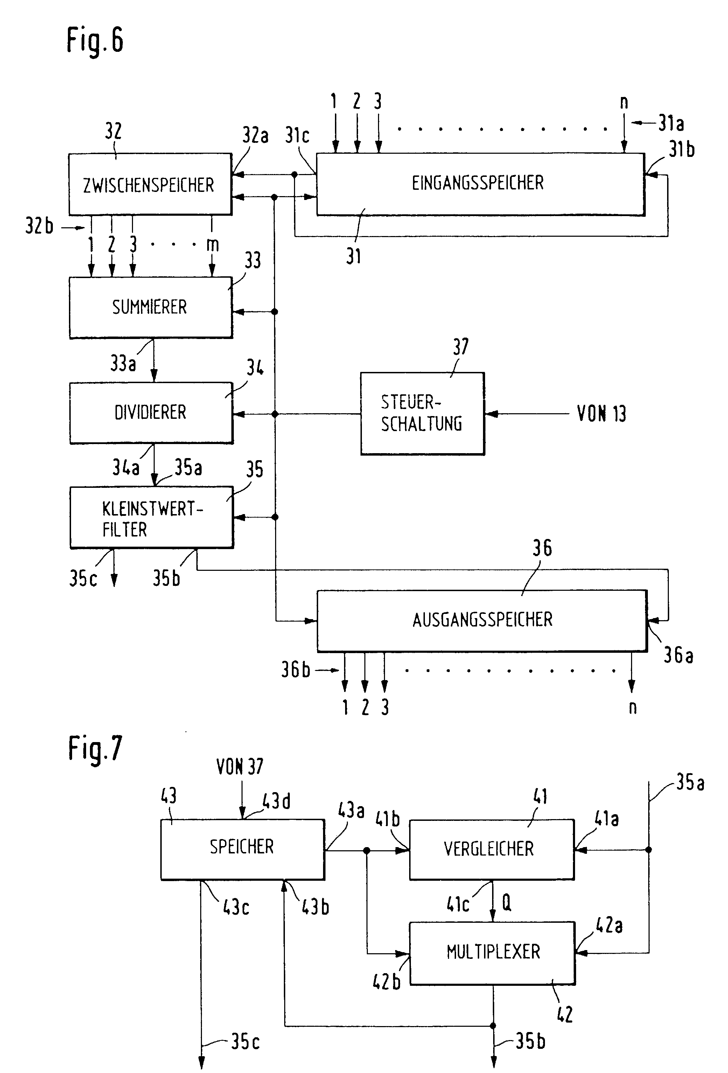

Fig. 6 zeigt eine Ausführungsform der Gleitschwellenprofilschaltung 28, die aus dem im Echoprofilspeicher 24 gespeicherten Echoprofil E ein Gleitschwellenprofil G der zuvor erläuterten Art erzeugt. Als Beispiel ist angenommen, daß jedes im Echoprofilspeicher 24 gespeicherte Echoprofil durch n binäre Codegruppen von jeweils k Bits dargestellt ist, die durch Digitalisierung von n Abtastwerten des Empfangssignals gebildet worden sind. Jede dieser Codegruppen stellt einen Zahlenwert dar, der die Amplitude des Echoprofils in einem bestimmten Zeitpunkt des Meßzyklus ausdrückt.

Die Gleitschwellenprofilschaltung von Fig. 6 enthält einen Eingangsspeicher 31 mit n Speicherstellen zu jeweils k Bits, dessen Speicherkapazität somit zur Speicherung eines vollständigen Echoprofils ausreicht. Der Eingangsspeicher 31 hat eine Gruppe von n parallelen Eingängen 31a, einen seriellen Eingang 31b und einen seriellen Ausgang 31c. Die parallelen Eingänge 31a sind mit entsprechenden parallelen Ausgängen des Echoprofilspeichers 24 für die Übertragung der n Codegruppen eines gespeicherten Echoprofils verbunden. Der serielle Eingang 31b ist mit dem seriellen Ausgang 31c verbunden, so daß die im Eingangsspeicher 31 gespeicherten n Codegruppen in Umlauf gehalten werden können. Vorzugsweise ist der Eingangsspeicher 31 als Schieberegister mit n Registerstufen ausgebildet, wobei jede Registerstufe eine binäre Codegruppe aus k Bits aufnehmen kann und eine Speicherstelle des Eingangsspeichers bildet.

Mit dem Ausgang 31c des Eingangsspeichers 31 ist der serielle Eingang 32a eines Zwischenspeichers 32 verbunden, der m Speicherstellen zu jeweils k Bits hat, wobei m < n ist. Der Zwischenspeicher 32 ist vorzugsweise als Schieberegister mit m Registerstufen ausgebildet, wobei jede Registerstufe eine binäre Codegruppe aus k Bits aufnehmen kann und eine Speicherstelle des Zwischenspeichers bildet. Die in den m Speicherstellen gespeicherten Codegruppen stehen an m parallelen Ausgängen 32b zur Verfügung. An die m parallelen Ausgänge 32b des Zwischenspeichers 32 sind die m parallelen Eingänge eines Summierers 33 angeschlossen, der an seinem Ausgang 33a ein digitales Signal abgibt, das die Summe der Zahlenwerte darstellt, die durch die seinen Eingängen zugeführten Codegruppen ausgedrückt sind. Dieses digitale Signal wird einem Dividierer 34 zugeführt, der die vom Summierer 33 gelieferte Summe durch die Anzahl der Codegruppen dividiert, aus denen die Summe gebildet worden ist, und das Divisionsergebnis in Form einer binären Codegruppe aus k Bits am Ausgang 34a abgibt. Somit stellt die am Ausgang 34a gelieferte Codegruppe den arithmetischen Mittelwert der im Zwischenspeicher 32 gespeicherten Codegruppen dar.

Der Ausgang 34a des Dividierers 34 ist mit dem Eingang 35a eines Kleinstwertfilters 35 verbunden, dessen Funktionsweise später anhand des in Fig. 7 dargestellten Ausführungsbeispiels erläutert wird. Die am Ausgang 35b des Kleinstwertfilters 35 erscheinenden digitalen Codegruppen werden dem seriellen Eingang 36a eines Ausgangsspeichers 36 zugeführt, der n Speicherstellen für jeweils k Bits hat und somit die gleiche Speicherkapazität wie der Eingangsspeicher 31 aufweist. Die in den n Speicherstellen des Ausgangsspeichers 36 gespeicherten digitalen Codegruppen stehen an n parallelen Ausgängen 36b zur Verfügung. Die Ausgänge 36b entsprechen dem Ausgang der Gleitschwellenprofilschaltung 28 von Fig. 1 und sind mit der Verknüpfungsschaltung 29 verbunden. Vorzugsweise ist der Ausgangsspeicher 36 in gleicher Weise wie der Eingangsspeicher 31 als Schieberegister ausgebildet.

Schließlich enthält die Gleitschwellenprofilschaltung von Fig. 6 eine Steuerschaltung 37, die die erforderlichen Takt-, Rückstell- und Steuersignale zu den zuvor beschriebenen Schaltungseinheiten 31 bis 36 liefert und ihrerseits Steuer- und Taktsignale vom Taktgeber 13 empfängt.

Das in Fig. 7 dargestellte Ausführungsbeispiel des Kleinstwertfilters 35 enthält einen Vergleicher 41, einen vom Vergleicher 41 gesteuerten Multiplexer 42 und einen Speicher 43 für eine binäre Codegruppe.

Der die Ausgangssignale des Dividierers 34 empfangende Eingang 35a ist mit einem Eingang 41a des Vergleichers 41 und mit einem Eingang 42a des Multiplexers 42 verbunden. Ein Ausgang 43a des Speichers 43 ist mit dem zweiten Eingang 41b des Vergleichers 41 und mit dem zweiten Eingang 42b des Multiplexers 42 verbunden. Der Ausgang 41c des Vergleichers 41 ist mit einem Steuereingang des Multiplexers 42 verbunden. Der Ausgang des Multiplexers 42 stellt den Ausgang 35b des Kleinstwertfilters 35 dar und ist außerdem mit einem Eingang 43b des Speichers 43 verbunden. Der Speicher 43 hat einen zweiten Ausgang 43c, der dem Ausgang 35c des Kleinstwertfilters 35 entspricht, jedoch bei der Schaltung von Fig. 6 nicht verwendet wird.

Am Beginn jedes Arbeitszyklus, in dessen Verlauf ein Gleitschwellenprofil G erzeugt wird, wird im Speicher 43 durch ein Rückstellsignal, das von der Steuerschaltung 37 zu einem Steuereingang 43d geliefert wird, die Codegruppe mit dem größtmöglichen Zahlenwert eingestellt. Im Verlauf des Meßzyklus werden der Reihe nach die vom Dividierer 34 kommenden Codegruppen dem Eingang 41a des Vergleichers 41 und dem Eingang 42a des Multiplexers 42 zugeführt, und gleichzeitig mit dem Empfang jeder solchen Codegruppe wird die im Speicher 43 gespeicherte Codegruppe an den Eingang 41b des Vergleichers 41 und an den Eingang 42b des Multiplexers 42 angelegt. Der Vergleicher 41 vergleicht die an seinen Eingängen 41a und 41b anliegenden Codegruppen und gibt an seinem Ausgang 41c ein Signal Q ab, das den Wert 1 hat, wenn die am Eingang 41b anliegende Codegruppe einen größeren Zahlenwert als die am Eingang 41a anliegende Codegruppe hat, und das den Wert 0 hat, wenn die am Eingang 41b anliegende Codegruppe einen kleineren Zahlenwert als die am Eingang 41a anliegende Codegruppe hat oder wenn beide Codegruppen den gleichen Zahlenwert haben. Wenn das dem Steuereingang des Multiplexers 42 zugeführte Signal Q den Wert 1 hat, überträgt der Multiplexer die dem Eingang 42a zugeführte Codegruppe zum Ausgang 35b, und wenn das Signal Q den Wert 0 hat, überträgt der Multiplexer 42 die am Eingang 42b anliegende Codegruppe zum Ausgang 35b. Somit überträgt der Multiplexer 32 von den beiden an seinen Eingängen 42a und 42b anliegenden Codegruppen jeweils diejenige mit dem kleineren Zahlenwert zum Ausgang 35b. Die jeweils am Ausgang 35b erscheinende Codegruppe wird anschließend als neuer Speicherinhalt in den Speicher 43 eingegeben.

Die beschriebene Funktionsweise des Kleinstwertfilters ergibt die Wirkung, daß im Speicher 43 stets die Codegruppe mit dem kleinsten Zahlenwert gespeichert ist, der bis zu dem betrachteten Zeitpunkt im Verlauf des Arbeitszyklus aufgetreten ist. Die gespeicherte Codegruppe wird am Ausgang 35b abgegeben, solange die vom Dividierer 34 abgegebenen Codegruppen größere Zahlenwerte als die gespeicherte Codegruppe haben. Wenn dagegen eine vom Dividierer 34 kommende Codegruppe einen kleineren Zahlenwert als die gespeicherte Codegruppe hat, wird sie anstelle der gespeicherten Codegruppe zum Ausgang 35b übertragen, und die im Speicher 43 gespeicherte Codegruppe wird anschließend durch die neue Codegruppe mit dem kleineren Zahlenwert ersetzt.

Am zweiten Ausgang 43c des Kleinstwertfilters 35 erscheint die im Speicher 43 gespeicherte Codegruppe gleichzeitig mit der am Ausgang 35b abgegebenen Codegruppe, bevor die am Ausgang 35b abgegebene Codegruppe als neuer Inhalt in den Speicher 43 eingegeben wird. Somit stehen an den Ausgängen 35b und 35c gleichzeitig die letzte und die vorletzte der vom Multiplexer 42 abgegebenen Codegruppen zur Verfügung.

Nachfolgend wird die Bildung eines Gleitschwellenprofils im Verlauf eines Arbeitszyklus in den zuvor beschriebenen Schaltungen von Fig. 6 und 7 erläutert. Zu Beginn des Arbeitszyklus werden die n Codegruppen eines im Profilspeicher 24 gespeicherten Echoprofils über die Eingänge 31a in den Eingangsspeicher 31 der Gleitschwellenprofilschaltung 28 parallel eingegeben. Diese Codegruppen werden durch von der Steuerschaltung 37 gelieferte Taktsignale in dem als Schieberegister ausgebildeten Eingangsspeicher 31 verschoben, so daß sie der Reihe nach am Ausgang 31c erscheinen und über den Eingang 31b wieder in den Eingangsspeicher 31 eingegeben werden. Gleichzeitig wird jede am Ausgang 31c erscheinende Codegruppe in den Zwischenspeicher 32 eingegeben und in diesem unter Steuerung durch die von der Steuerschaltung 37 gelieferten Taktsignale im gleichen Takt verschoben wie die im Eingangsspeicher 31 gespeicherten Codegruppen. Somit beginnt sich der Zwischenspeicher 32 mit den vom Eingangsspeicher 31 kommenden Codegruppen zu füllen, bis er nach der Eingabe der ersten m Codegruppen vollständig gefüllt ist. Bei der Eingabe weiterer Codegruppen bleiben jeweils die m zuletzt eingegebenen Codegruppen im Zwischenspeicher 32, während die früher eingegebenen Codegruppen verschwinden. Die zeitliche Reihenfolge der Eingabe der Codegruppen in den Zwischenspeicher 32 entspricht der zeitlichen Reihenfolge der Bildung der Codegruppen des Echoprofils im Verlauf eines Meßzyklus: Zuerst wird die Codegruppe Nr. 1 eingegeben, die als erste am Beginn eines Meßzyklus durch Abtastung des Empfangssignals und Digitalisierung des Abtastwerts gebildet worden ist, dann die Codegruppe Nr. 2 usw., bis schließlich die letzte Codegruppe Nr. n eingegeben wird, die am Ende des Meßzyklus gebildet worden ist.

Der Summierer 33 bildet nach jeder Eingabe einer Codegruppe in den Zwischenspeicher 32 die Summe der Zahlenwerte aller im Zwischenspeicher stehenden Codegruppen und liefert am Ausgang 33a eine diese Summe darstellende Codegruppe zum Dividierer 34. Der Dividierer 34 dividiert den Zahlenwert jeder vom Summierer 33 kommenden Codegruppe durch die Anzahl der im Zwischenspeicher 32 stehenden Codegruppen und gibt am Ausgang eine Codegruppe ab, die den Zahlenwert des Divisionsergebnisses darstellt, also den arithmetischen Mittelwert der Zahlenwerte der im Zwischenspeicher 32 stehenden Codegruppen. Wie zuvor beschrieben wurde, gibt das Kleinstwertfilter 35 für jede vom Dividierer 34 kommende Codegruppe am Ausgang 35b eine Codegruppe ab, deren Zahlenwert dem kleinsten bis dahin im gleichen Arbeitszyklus erhaltenen Mittelwert entspricht. Diese Kleinstwert-Codegruppen erscheinen am Ausgang 35b des Kleinstwertfilters 35 im gleichen Takt, in dem auch die Übertragung der Codegruppen vom Eingangsspeicher 31 in den Zwischenspeicher 32 erfolgt. Die Kleinswert-Codegruppen werden in diesem Takt in den Ausgangsspeicher 36 eingegeben und in diesem verschoben.

Nachdem die n Codegruppen des im Eingangsspeicher 31 stehenden Echoprofils in den Zwischenspeicher übertragen worden sind, stehen im Ausgangsspeicher 36 somit n Codegruppen, die fortschreitend kleinere oder höchstens gleiche Zahlenwerte haben. Diese Codegruppen bilden das Gleitschwellenprofil G, das demzufolge einen monoton fallenden Verlauf hat.

Die n Codegruppen des im Ausgangsspeicher 36 stehenden Gleitschwellenprofils G werden über die Ausgänge 36b parallel in die Verknüpfungsschaltung 29 (Fig. 1) eingegeben und in die' ser mit den Codegruppen des in der Festschwellenprofilschaltung 26 gespeicherten Festschwellenprofils F verknüpft. Die Verknüpfung geschieht auf einfache Weise dadurch, daß jede Codegruppe des Gleitschwellenprofils G mit der entsprechenden Codegruppe des Festschwellenprofils F verglichen und die Codegruppe mit dem größeren Zahlenwert ausgewählt und gespeichert wird. Die auf diese Weise ausgewählten und gespeicherten Codegruppen bilden zusammen das resultierende Schwellenprofil H, das der Auswerteschaltung 25 zugeführt wird.

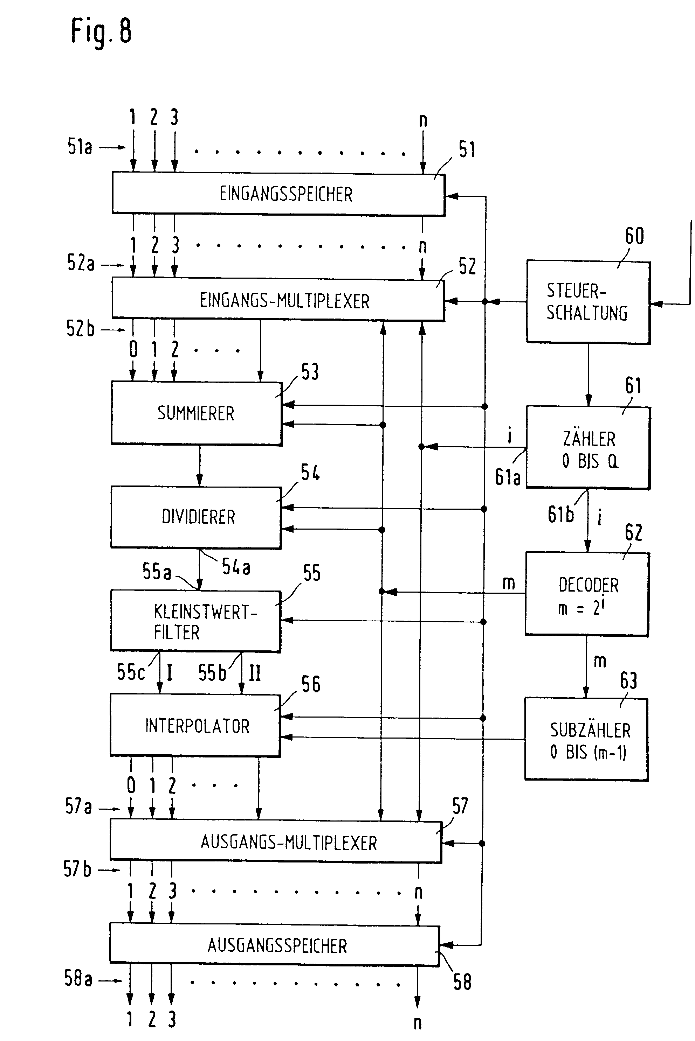

Fig. 8 zeigt ein anderes Ausführungsbeispiel einer Gleitschwellenprofilschaltung, die für die Gleitschwellenprofilschaltung 28 von Fig. 1 verwendet werden kann. Die Gleitschwellenprofilschaltung von Fig. 8 hat einen Eingangsspeicher 51 mit n Speicherstellen zu jeweils k Bits, dessen Speicherkapazität somit zur Speicherung eines vollständigen Echoprofils ausreicht. Der Eingangsspeicher 51 hat eine Gruppe von n parallelen Eingängen 51a und eine Gruppe von n parallelen Ausgängen. Die n parallelen Eingänge 51a sind mit dem Echoprofilspeicher 24 für die Übertragung der n Codegruppen eines gespeicherten Echoprofils verbunden. Die n parallelen Ausgänge des Eingangsspeichers 51 sind mit n parallelen Eingängen 52a eines Eingangs-Multiplexers 52 verbunden. An die parallelen Ausgänge 52b des Multiplexers 52 ist ein Summierer 53 angeschlossen, der ähnlich wie der Summierer 33 von Fig. 6 die Summe der Zahlenwerte von m Codegruppen bildet, die der Multiplexer 52 aus den n Codegruppen auswählt, die seinen Eingängen zugeführt werden. Das die Summe darstellende digitale Ausgangssignal des Summierers 53 wird einem Dividierer 54 zugeführt, der - ähnlich wie der Dividierer 34 von Fig. 6 - die Summe durch die Anzahl der Codegruppen dividiert, aus denen die Summe gebildet worden ist, und das Divisionsergebnis in Form einer digitalen Codegruppe am Ausgang 54a abgibt. Somit stellt die am Ausgang 54a gelieferte Codegruppe den arithmetischen Mittelwert der vom Summierer 53 addierten Zahlenwerte dar.

Der Ausgang 54a des Dividierers 54 ist mit dem Eingang 55a eines Kleinstwertfilters 55 verbunden, das die gleiche Funktionsweise wie das Kleinstwertfilter 35 von Fig. 6 hat und beispielsweise den in Fig. 7 dargestellten Aufbau haben kann. Die beiden Ausgänge 55b und 55c des Kleinstwertfilters 55 entsprechen den Ausgängen 35b bzw. 35c des Kleinstwertfilters von Fig. 7. Das Kleinstwertfilter 55 von Fig. 8 liefert also an den beiden Ausgängen 55b und 55c gleichzeitig die letzte und die vorletzte ausgefilterte Codegruppe mit den bis dahin kleinsten Zahlenwerten. Die am Ausgang 55c abgegebene vorletzte Codegruppe wird als Codegruppe I und die am Ausgang 55b abgegebene letzte Codegruppe wird als Codegruppe II bezeichnet.

Die Ausgänge 55c und 55b des Kleinstwertfilters 55 sind mit zwei Eingängen eines Interpolators 56 verbunden, der eine lineare Interpolation in (m-1) Schritten zwischen den Zahlenwerten der Codegruppen I und II durchführt und (m-1) Codegruppen, die den Interpolationswerten entsprechen, sowie die Codegruppe II an seinen Ausgängen abgibt. Die Ausgänge des Interpolators 56 sind mit einer entsprechenden Anzahl von Eingängen 57a eines Ausgangs-Multiplexers 57 verbunden, der n Ausgänge 57b hat, die mit den n Eingängen eines Ausgangsspeichers 58 verbunden sind. Der Ausgangsspeicher 58 hat n Speicherstellen zu jeweils k Bits und somit die gleiche Kapazität wie der Eingangsspeicher 51. Die in den n Speicherstellen des Ausgangsspeichers 58 gespeicherten Codegruppen stehen an n parallelen Ausgängen 58a zur Verfügung, die dem Ausgang der Gleitschwellenprofilschaltung 28 von Fig. 1 entsprechen. Der Ausgangsspeicher 58 hat in der Schaltung von Fig. 8 die gleiche Funktion wie der Ausgangsspeicher 36 in der Schaltung von Fig. 6; am Ende eines Arbeitszyklus stehen im Ausgangsspeicher 58 die Werte eines vollständigen Gleitschwellenprofils G.

Ferner enthält die Gleitschwellenprofilschaltung von Fig. 8 eine Steuerschaltung 60, die die erforderlichen Takt-, Rückstell- und Steuersignale zu den zuvor beschriebenen Schaltungseinheiten 51 bis 58 liefert und somit im wesentlichen die gleiche Funktion wie die Steuerschaltung 37 in der Gleitschwellenschaltung von Fig. 6 hat. Die Steuerschaltung 60 liefert zusätzlich Zählimpulse zu einem Zähler 61, dessen Zählerstand i an Ausgängen 61a und 61b zur Verfügung steht. Ein an den Ausgang 61b angeschlossener Decoder 62 bildet aus dem Zählerstand i die Zahl m, die dem Eingangs-Multiplexer 52, dem Summierer 53, dem Dividierer 54, dem Ausgangs-Multiplexer 57 sowie einem Subzähler 63 zugeführt wird. Die Funktionen dieser Schaltungen werden aus der folgenden Beschreibung des Ablaufs eines Arbeitszyklus verständlich.

Der wesentliche Unterschied gegenüber der Gleitschwellenprofil schaltung von Fig. 6 besteht darin, daß in der Gleitschwellenprofilschaltung von Fig. 8 nicht jeder Wert des im Ausgangsspeicher 58 stehenden Gleitschwellenprofils direkt aus Werten des im Eingangsspeicher 51 stehenden Echoprofils ermittelt wird; vielmehr gibt es q+1 Stützpunkte, die Eckwerte von Bereichen 0..i..q sind, wobei in jedem dieser Bereiche die Zwischenwerte durch lineare Interpolation erhalten werden. Die nacheinander bearbeiteten Bereiche werden durch den Zähler 61 bestimmt, der in jedem Arbeitszyklus von 0 bis q zählt. Für jeden Bereich werden m Werte des Gleitschwellenprofils gebildet; zu diesem Zweck müssen zusätzlich zu den beiden Eckwerten, die Stützpunkten entsprechen, m-1 Zwischenwerte durch Interpolation gebildet werden. Die Bereiche haben eine von 0 bis q zunehmende Größe, und dementsprechend nimmt der Abstand zwischen den Stützpunkten und die Anzahl m der für jeden Bereich zu bildenden Werte zu. Die Vergrößerung wird durch den Decoder 62 bestimmt und kann beliebig gewählt werden. Im nachfolgend beschriebenen Beispiel ist angenommen, daß der Decoder die Zahl m aus dem Zählerstand i nach der Funktion

$$m = 2^i$$

bildet. Dies bedeutet, daß jeder Bereich um den Faktor 2 größer als der vorhergehende Bereich ist.

Am Beginn jedes Arbeitszyklus werden die n Codegruppen eines vollständigen Echo profils in den Eingangsspeicher 51 eingegeben. Die Zähler 61 und 63 sind auf Null zurückgestellt. Im Kleinstwertfilter 55 ist, wie zuvor anhand von Fig. 7 erläutert worden ist, im Speicher 43 die Codegruppe mit dem größtmöglichen Zahlenwert eingestellt.

Der Eingangsmultiplexer 52 wird durch das vom Decoder 62 kommende Signal mit dem Zahlenwert m so gesteuert, daß er die den Eingängen Nr. m bis (2m-1) seiner Eingangsgruppe 52a zugeführten Codegruppen an den Ausgängen Nr. 0 bis (m-1) seiner Ausgangsgruppe 52b abgibt. Dadurch werden für jeden Bereich, dessen Nummer durch den Zählerstand des Zählers 61 bestimmt ist, m Werte des im Eingangsspeicher 51 stehenden Echoprofils durch den Eingangs-Multiplexer 52 ausgewählt und dem Summierer 53 zugeführt.

Am Beginn des Arbeitszyklus hat der Zähler 61 den Zählerstand i = 0, und dementsprechend gibt der Decoder 62 den Wert m = 1 ab. Der Eingangs-Multiplexer 52 überträgt die seinem Eingang 1 zugeführte Codegruppe zu seinem Ausgang Nr. 0. Die im Summierer 53 gebildete Summe sowie der im Divierer 54 gebildete Mittelwert entsprechen dem Zahlenwert dieser einzigen Codegruppe. Da dieser Zahlenwert in der Regel kleiner als der im Speicher des Kleinstwertfilters 55 gespeicherte Größtwert ist, wird er am Ausgang 55b des Kleinstwertfilters 55 als Wert II abgegeben.

Für jeden vom Decoder 62 gelieferten Wert m zählt der Subzähler 63 m Zählimpulse vom Zählerstand 0 bis zum Zählerstand (m-1). Er steuert dadurch die (m-1) Schritte der linearen Interpolation im Interpolator 56. Da in der betrachteten Anfangsphase m = 1 ist, findet im Subzähler 63 keine Zählung und demzufolge im Interpolator 56 keine Interpolation statt. Der Wert II wird vom ersten Ausgang des Interpolators 56 zum Eingang Nr. 0 des Ausgangs-Multiplexers 57 übertragen. Zugleich wird der Wert II im Speicher 43 des Kleinstwertfilters 55 gespeichert.

Der Ausgangs-Multiplexer 57 hat die umgekehrte Funktion des Eingangs-Multiplexers 52: Er wird durch das vom Decoder 62 kommende Signal mit dem Zahlenwert m so gesteuert, daß er die den Eingängen Nr. 0 bis (m-1) seiner Eingangsgruppe 57a zugeführten Codegruppen an den Ausgängen Nr. m bis (2m-1) seiner Ausgangsgruppe 57b abgibt. Da der Decoder 62 in der betrachteten Anfangsphase den Wert m = 1 liefert, wird die dem Eingang Nr. 0 der Eingangsgruppe 57a zugeführte Codegruppe am Ausgang Nr. 1 der Ausgangsgruppe 57b abgegeben und über den damit verbundenen Eingang in den Ausgangsspeicher 58 eingegeben. Diese Codegruppe stellt den ersten Stützpunkt und somit den Anfangs-Eckwert des ersten Bereichs 1 des zu bildenden Gleitschwellenprofils dar; sie wird im Ausgangsspeicher 58 in der dem ersten Abtastzeitpunkt des Meßzyklus zugeordneten Speicherstelle gespeichert.

Die nächste Phase des Arbeitszyklus beginnt, wenn der Zähler 61 den Zählerstand i = 1 annimmt, so daß der Decoder 62 den Wert m = 2 abgibt. Der Eingangs-Multiplexer 52 liefert die den Eingängen Nr. 2 und 3 der Eingangsgruppe 52a zugeführten Codegruppen an den Ausgängen Nr. 0 und 1 der Ausgangsgruppe 52b zu dem Summierer 53, der die Summe der Zahlenwerte dieser beiden Codegruppen bildet. Diese Summe wird im Dividierer 54 durch den Wert m = 2 dividiert. Der dadurch erhaltene Mittelwert wird vom Kleinstwertfilter 55 am Ausgang 55b als Wert II abgegeben, wenn er kleiner als der in der vorhergehenden Phase gespeicherte Wert ist, der gleichzeitig als Wert I am Ausgang 55c abgegeben wird; andernfalls erscheint der gespeicherte Wert an den beiden Ausgängen 55b und 55c als Wert II und als Wert I. Die beiden Werte I und II bilden die Eckwerte des Bereichs.

Da der Subzähler 63 für den Wert $m = 2$ von 0 bis 1 zählt, findet im Interpolator 56 ein Interpolationsschritt statt, in dem durch lineare Interpolation ein Zwischenwert zwischen den Werten I und II gebildet wird. Die den Zwischenwert und den Wert II darstellenden Codegruppen werden an den beiden Ausgängen des Interpolators 56 abgegeben, die mit den Eingängen Nr. 0 und 1 der Eingangsgruppe 57a des Ausgangs-Multiplexers 57 verbunden sind. Der Ausgangs-Multiplexer liefert diese Codegruppen an den Ausgängen Nr. 2 und 3 der Ausgangsgruppe 57b zu den entsprechenden Eingängen des Ausgangsspeichers 58; sie werden im Ausgangsspeicher 58 in den dem zweiten bzw. dem dritten Abtastzeitpunkt des Meßzyklus zugeordneten Speicherstellen gespeichert.

Diese Vorgänge wiederholen sich von Phase zu Phase für die aufeinanderfolgenden Werte des Zählerstands i des Zählers 61 mit zunehmenden Abständen der Stützpunkte und einer entsprechenden Zunahme der Anzahl der Interpolationen zwischen den Stützpunkten. Die folgende Tabelle zeigt die Ein- und Ausgänge der Multiplexer 52 und 57 sowie die Anzahl der Interpolationen, die für verschiedene Werte von i für die Bildung der Werte des Gleitschwellenprofils herangezogen werden:

| i | 0 | 1 | 2 | 3 | 4 | i |
|---|---|---|---|---|---|---|
| m | 1 | 2 | 4 | 8 | 16 | $2^i$ |
| Eingänge 52a | 1 | 2,3 | 4..7 | 8..15 | 16..31 | m..(2m-1) |
| Ausgänge 52b | 0 | 0,1 | 0..3 | 0..7 | 0..15 | 0..(m-1) |
| Interpolationen | 0 | 1 | 3 | 7 | 15 | (m-1) |
| Eingänge 57a | 0 | 0,1 | 0..3 | 0..7 | 0..15 | 0..(m-1) |
| Ausgänge 57b | 1 | 2,3 | 4..7 | 8..15 | 16..31 | m..(2m-1) |

Nach q Phasen sind alle n Codegruppen des im Eingangsspeicher 51 stehenden Echoprofils verarbeitet, und im Ausgangsspeicher 58 stehen die n Codegruppen des gesamten Gleitschwellenprofils G, das dann in der zuvor beschriebenen Weise in der Verknüpfungsschaltung 29 mit dem Festschwellenprofil F zur Bildung des der Auswerteschaltung 25 zuzuführenden Schwellenprofils H verknüpft werden kann.

Auch bei der Ausführungsform von Fig. 8 erhält man ein monoton fallendes Gleitschwellenprofil, da die vom Kleinstwertfilter 55 ausgewählten Stützwerte fortlaufend kleiner oder höchstens gleich groß sind und die linear interpolierten Zwischenwerte Amplituden entsprechen, die zwischen den Amplituden der beiden Stützwerte liegen. Diese Ausführungsform ergibt eine noch bessere Glättung des Gleitschwellenprofils als die Ausführungsform von Fig. 6. Die zunehmende Vergrößerung der Interpolationsbereiche erlaubt eine bessere Anpassung des Gleitschwellenprofils an die Besonderheiten des Echoprofils. Im Anfangsbereich, in dem das Echoprofil größeren Änderungen unterworfen ist, insbesondere infolge des Ausschwingens des Ultraschallwandlers und infolge von Nahzielechos, sind die Interpolationsbereiche klein, so daß das Gleitschwellenprofil dem Echoprofil trotz der größeren Änderungen gut folgen kann. Dagegen genügen in den späteren Teilen des Meßzyklus, die größeren Meßentfernungen entsprechen, größere Interpolationsbereiche für eine gute Anpassung des Gleitschwellenprofils an den Verlauf des Echoprofils.

Für den Fachmann ist es offensichtlich, daß die in den Figuren 6, 7 und 8 dargestellten Schaltungsblöcke nicht notwendigerweise als diskrete Schaltungen ausgebildet sein müssen, sondern durch Funktionen eines geeignet programmierten Mikrocomputers realisiert werden können. In diesem Fall sind vorzugsweise auch der Echoprofilspeicher 24, die Auswerteschaltung 25, die Festschwellenprofilschaltung 26 und die Verknüpfungsschaltung 29 von Fig. 1 durch Funktionen des gleichen Mikrocomputers realisiert.

**Patentansprüche**

1.  Verfahren zur Abstandsmessung nach dem Impulslaufzeitprinzip, bei welchem in aufeinanderfolgenden Meßzyklen jeweils während einer Sendephase ein Impuls (S) ausgesendet wird und in einer sich an die Sendephase anschließenden Empfangsphase das Empfangssignal als Echoprofil (E) gespeichert wird, bei welchem aus wenigstens einem gespeicherten Echoprofil (E) das an dem zu messenden Objekt reflektierte Nutzecho (N) ermittelt wird und der Abstand des Objekts aus dem Zeitabstand zwischen der Aussendung des Impulses (S) und dem Empfang des Nutzechos (N) bestimmt wird, wobei zur Unterdrückung von Störsignalen (P) aus einem gespeicherten Echoprofil (E) ein Gleitschwellenprofil (G) dadurch gebildet wird, daß das Echoprofil (E) durch Glättung derart von Schwankungen befreit wird, daß das Ergebnis eine monoton fallende Kurve ist, und bei welchem das Gleitschwellenprofil (G) mit einem der Meßumgebung zur Unterdrückung wiederkehrender Störsignale angepaßten Festschwellenprofil (F) kombiniert wird und das resultierende Schwellenprofil (H) bei jeder Auswertung von gespeicherten Echoprofilen (E) angewendet wird, dadurch gekennzeichnet, daß die Werte des Gleitschwellenprofils (G) für aufeinanderfolgende Zeitpunkte des Meßzyklus aus Werten des gespeicherten Echoprofils (E) gebildet werden und daß zur Erzielung der monoton fallenden Kurve für jeden einem Zeitpunkt des Meßzyklus entsprechenden Wert des Gleitschwellenprofils (G) der für diesen Zeitpunkt gebildete Wert verwendet wird, wenn er kleiner als der für den vorhergehenden Zeitpunkt verwendete Wert oder gleich diesem Wert ist, und andernfalls der für den vorhergehenden Zeitpunkt verwendete Wert verwendet wird.

2. Verfahren nach Anspruch 1, dadurch gekennzeichnet, daß zur Glättung des Echoprofils (E) für jeden Wert des Gleitschwellenprofils (G) der Mittelwert von mehreren aufeinanderfolgenden Werten des Echoprofils (E) gebildet wird.

3. Verfahren nach Anspruch 1, dadurch gekennzeichnet, daß aus dem Echoprofil (E) in Abständen liegende Stützwerte des Gleitschwellenprofils (G) ermittelt werden und daß die zwischen den Stützwerten liegenden Werte des Gleitschwellenprofils (G) durch lineare Interpolation gebildet werden.

4. Verfahren nach Anspruch 3, dadurch gekennzeichnet, daß die Abstände zwischen den Stützwerten im zeitlichen Verlauf des Meßzyklus fortlaufend vergrößert werden.

5. Verfahren nach Anspruch 4, dadurch gekennzeichnet, daß die Abstände zwischen den Stützwerten im zeitlichen Verlauf des Meßzyklus fortlaufend um den Faktor 2 vergrößert werden.

6. Verfahren nach einem der Ansprüche 3 bis 5, dadurch gekennzeichnet, daß zur Bildung jedes Stützwertes der Mittelwert von mehreren aufeinanderfolgenden Werten des Echoprofils (E) gebildet wird.

7. Anordnung zur Durchführung des Verfahrens nach einem der vorhergehenden Ansprüche, mit einer Sende-Empfangs-Einrichtung (12, 13, 14, 15) zur Aussendung eines Sendeimpulses (S) in jedem Meßzyklus und zum Empfang der aufgrund jedes Sendeimpulses eintreffenden Echosignale sowie mit einer an die Sende-Empfangs-Einrichtung (12, 13, 14, 15) angeschlossenen Signalverarbeitungsschaltung (20) mit einem Echoprofilspeicher (24), in dem wenigstens ein Echoprofil (E) gespeichert ist, das dem von der Sende-Empfangs-Einrichtung (12, 13, 14, 15) im Verlauf eines Meßzyklus gelieferten Empfangssignal entspricht, mit einer Auswerteschaltung (25), die aus dem im Echoprofilspeicher (24) gespeicherten Echoprofil (E) das an dem zu messenden Objekt reflektierte Nutzecho (N) ermittelt und den Abstand des Objekts aus dem Zeitabstand zwischen der Aussendung des Sendeimpulses (S) und dem Empfang des Nutzechos (N) bestimmt, und mit einer Gleitschwellenprofilschaltung (28) zur Bildung eines geglätteten und monoton fallenden Gleitschwellenprofils (G) aus einem gespeicherten Echoprofil (E), dadurch gekennzeichnet, daß die Gleitschwellenprofilschaltung (28) ein Kleinstwertfilter (35; 55) enthält, das jeden für einen bestimmten Zeitpunkt des Meßzyklus gebildeten Wert des Gleitschwellenprofils (G) mit dem für den vorhergehenden Zeitpunkt gebildeten Wert vergleicht und den kleineren der beiden verglichenen Werte oder, falls die beiden verglichenen Werte gleich sind, diesen Wert als den für diesen Zeitpunkt gebildeten Wert des Gleitschwellenprofils (G) abgibt.

8. Anordnung nach Anspruch 7, dadurch gekennzeichnet, daß das Kleinstwertfilter (35; 55) einen Speicher (43) für die Speicherung eines Wertes des Gleitschwellenprofils (G), einen Vergleicher (41) und einen vom Ausgangssignal des Vergleichers (41) gesteuerten Multiplexer (42) enthält, daß der Vergleicher (41) und der Multiplexer (42) jeweils an einem ersten Eingang (41a, 42a) einen von vorgeschalteten Schaltungen gebildeten Wert des Gleitschwellenprofils (G) und an einem zweiten Eingang (41b, 42b) den im Speicher (43) gespeicherten Wert des Gleitschwellenprofils (G) empfangen, daß das Ausgangssignal des Vergleichers (41) den Multiplexer (42) in Abhängigkeit vom Vergleichsergebnis so steuert, daß dieser den kleineren der beiden Werte bzw. den gleichen Wert an seinem Ausgang abgibt, und daß der vom Multiplexer (42) abgegebene Wert im Speicher (43) des Kleinstwertfilters (35; 55) gespeichert wird.

9. Anordnung nach Anspruch 7 oder 8, dadurch gekennzeichnet, daß die Gleitschwellenprofilschaltung (28) einen Ausgangsspeicher (36; 58) enthält, in dem die vom Kleinstwertfilter (35; 55) abgegebenen Werte des Gleitschwellenprofils (G) an den Zeitpunkten des Meßzyklus zugeordneten Speicherstellen gespeichert werden.

10. Anordnung nach einem der Ansprüche 7 bis 9, dadurch gekennzeichnet, daß die Gleitschwellenprofilschaltung (28) einen Eingangsspeicher (31; 51) zur Speicherung eines Echoprofils (E) enthält, sowie eine Schaltung (32, 33, 34; 52, 53, 54) zur Bildung des Mittelwerts mehrerer im Eingangsspeicher (31; 51) gespeicherter Werte des Echoprofils (E), deren den Mittelwert darstellendes Ausgangssignal dem Eingang des Kleinstwertfilters (35; 55) zugeführt wird.

11. Anordnung nach Anspruch 10, dadurch gekennzeichnet, daß die Schaltung (32, 33, 34; 52, 53, 54) zur Bildung des Mittelwerts einen Summierer (33; 53) enthält, der an seinen Eingängen eine Anzahl von Werten des Echoprofils (E) empfängt und an seinem Ausgang ein die Summe dieser Werte darstellendes Ausgangssignal abgibt, sowie einen das Ausgangssignal des Summierers (33; 53) empfangenden Dividierer (34; 54), der die Summe durch die Anzahl der Werte dividiert, aus denen die Summe gebildet worden ist.

12. Anordnung nach Anspruch 11, dadurch gekennzeichnet, daß zwischen den Eingangsspeicher (31) und den Summierer (33) ein Zwischenspeicher (32) eingefügt ist, in den die zu summierenden Werte des Echoprofils (E) aus dem Eingangsspeicher (31) übertragen werden.

13. Anordnung nach Anspruch 11, dadurch gekennzeichnet, daß zwischen den Eingangsspeicher (51) und den Summierer (53) ein Multiplexer (52) eingefügt ist, der jeweils die Ausgangssignale einer Gruppe von Ausgängen des Eingangsspeichers (51) zu den Eingängen des Summierers (53) überträgt.

14. Anordnung nach Anspruch 13, dadurch gekennzeichnet, daß die Anzahl der Ausgänge in jeder Gruppe durch ein dem Multiplexer (52) zugeführtes Steuersignal einstellbar ist.

15. Anordnung nach Anspruch 14, gekennzeichnet durch einen Zähler (61) zur Zählung der aufeinanderfolgenden Phasen, in denen jeweils ein Mittelwert gebildet wird, und durch einen Decoder (62), der aus dem Zählerstand des Zählers (61) nach einer vorgegebenen Funktion das Steuersignal bildet, das die Anzahl der Ausgänge in jeder Gruppe bestimmt.

16. Anordnung nach einem der Ansprüche 7 bis 15, gekennzeichnet durch einen Interpolator (56), der den vom Kleinstwertfilter (55) für einen bestimmten Zeitpunkt ausgefilterten Wert des Gleitschwellenprofils (G) und den für einen vorhergehenden Zeitpunkt ausgefilterten Wert empfängt und eine bestimmte Anzahl von Zwischenwerten durch lineare Interpolation erzeugt.

17. Anordnung nach Anspruch 16, dadurch gekennzeichnet, daß die Anzahl der Zwischenwerte durch ein dem Interpolator (56) zugeführtes Steuersignal einstellbar ist.

18. Anordnung nach den Ansprüchen 15 und 17, dadurch gekennzeichnet, daß die Anzahl der Zwischenwerte durch das vom Decoder (62) gebildete Steuersignal bestimmt ist.

19. Anordnung nach Anspruch 18, dadurch gekennzeichnet, daß zwischen den Interpolator (56) und den Ausgangsspeicher (58) ein Multiplexer (57) eingefügt ist, der die vom Interpolator (56) gelieferten Werte jeweils einer Gruppe von parallelen Eingängen des Ausgangsspeichers (58) zuführt.

20. Anordnung nach Anspruch 19, dadurch gekennzeichnet, daß die Anzahl der Eingänge in jeder Gruppe durch ein dem Multiplexer (57) zugeführtes Steuersignal einstellbar ist.

21. Anordnung nach den Ansprüchen 15 und 20, dadurch gekennzeichnet, daß die Anzahl der Eingänge in jeder Gruppe durch das vom Decoder (62) gebildete Steuersignal bestimmt ist.

**Claims**

1. A method for distance measurement using the pulse transit time principle, in which in consecutive measurement cycles in each case in a transmission phase a pulse (S) is transmitted and in a receiving phase following the transmission phase the received signal is stored as an echo profile (E), in which further from at least one stored echo profile (E) the useful echo (N) reflected at the object to be measured is ascertained and the distance of the object is determined from the interval in time between the transmission of the pulse (S) and the reception of the useful echo (N), wherein for the suppression of interfering signals (P) a floating threshold profile (G) is formed from a stored echo profile (E) by freeing the echo profile of fluctuations by smoothing it in such a manner that the result is a monotonously descending curve, and wherein the floating threshold profile (G) is combined with a fixed echo profile (F) which is adapted to the measurement environment for the suppression of recurrent interfering signals, the resulting threshold profile (H) being employed in each evaluation of stored echo profiles (E), characterized in that the values of the floating echo profile (G) for consecutive instants of the measurement cycle are formed from values of the stored echo profile (E), and that for obtaining the monotonously descending curve for each value, corresponding to an instant in the measurement cycle, of the floating threshold profile (G) the value is utilized which is formed for this instant, if it is smaller than the value employed for the preceding instant, and otherwise the value formed for the preceding instant is utilized.

2.  The method according to claim 1, characterized in that for smoothing the echo profile (E) the mean value of a plurality of consecutive values of the echo profile (E) is formed for each value of the floating threshold profile (G).

3.  The method according to claim 1, characterized in that from the echo profile (E) spaced support values of the floating threshold profile (G) are determined, and in that the values, which are between support values, of the floating threshold profile (G) are formed by linear interpolation.

4.  The method according to claim 3, characterized in that the distances between the support values are progressively increased in the course of time of the measurement cycle.

5.  The method according to claim 4, characterized in that the distances between the support values are progressively increased in the course of time of the measurement cycle by a factor of 2.

6.  The method according to any one of claims 3 to 5, characterized in that for the formation of each support value the mean value of a plurality of consecutive values of the echo profile (E) is formed.

7.  An arrangement for performing the method according to any one of the preceding claims, comprising a transmitting and receiving device (12, 13, 14, 15) for transmitting a transmission pulse (S) in each measurement cycle and for receiving the echo signals arriving as a result of each transmission pulse, and a signal processing circuit (20) connected with the transmitting and receiving device (12, 13, 14, 15), said signal processing circuit comprising an echo profile memory (24) in which at least one echo profile (E) is stored which corresponds to the received signal supplied by the transmitting and receiving device (12, 13, 14, 15) in the course of a measurement cycle, an evaluation circuit (25) which from the echo profile (E) stored in the echo profile memory (24) ascertains the useful echo (N) reflected at the object to be measured and determines the distance of the object from the time interval between the transmission of the transmission pulse (S) and the reception of the useful echo (N), and a floating threshold profile circuit (28) for generating a smoothed and monotonously descending floating threshold profile (G) from a stored echo profile (E), characterized in that the floating threshold profile circuit (28) comprises a minimum value filter (35; 55) which compares each value, formed for a given instant in the measurement cycle, of the floating threshold profile (G) with the value formed for the preceding instant and outputs the smaller one of the two values compared or, if the two values compared are equal, outputs this value as the value, formed for this instant, of the floating theshold profile (G).

8.  The arrangement according to claim 7, characterized in that the minimum value filter (35; 55) comprises a memory (34) for the storage of a value of the floating threshold profile (G), a comparator (41) and a multiplexer (42) controlled by the output signal of the comparator (41), that the comparator (41) and the multiplexer (42) each receive at a first input (41a, 42a) a value, formed by preceding circuits, of the floating threshold profile (G) and at a second input the value, stored in the memory (43), of the floating threshold profile (G), that the output signal of the comparator (41) so controls the multiplexer (42) in a manner dependent on the result of comparison that the same supplies the smaller one of the two values or the equal value, respectively, at its output, and that the value supplied by the multiplexer (42) is stored in the memory (43) of the minimum value filter (35; 55).

9.  The arrangement according to claim 7 or 8, characterized in that the floating threshold profile circuit (28) comprises an output memory (36; 58) in which the values, supplied by the minimum value filter (35; 55), of the floating threshold profile (G) are stored in memory positions corresponding to the instants of the measurement cycle.

10. The arrangement according to any one of claims 7 to 9, characterized in that the floating threshold profile circuit (28) comprises an input memory (31; 51) for the storage of an echo profile (E), and furthermore a circuit (32, 33, 34; 52, 53, 54) for the formation of the mean value of a plurality of values, stored in the input memory (31; 51), of the echo profile (E), whose output signal representing the mean value is supplied to the input of the minimum value filter (35; 55).

11. The arrangement according to claim 10, characterized in that the circuit (32, 33, 34; 52, 53, 54) for the formation of the mean value comprises an adder (33; 53), which at its inputs receives a plurality of values of the echo profile (E) and at its output supplies an output signal constituting the sum of these values, and furthermore a divider (34; 54) which receives the output signal of the adder (33; 53) and divides the sum by the number of values from which the sum is formed.

12. The arrangement according to claim 11, characterized in that between the input memory (31) and the adder (33) an intermediate memory (32) is inserted to which the values to be summated of the echo profile (E) are transferred from the input memory (31).

13. The arrangement according to claim 11, characterized in that between the input memory (51) and the adder (53) a multiplexer (52) is inserted which in each case transfers the output signals of a group of outputs of the input memory (51) to the inputs of the adder (53).

14. The arrangement according to claim 13, in that the number of the outputs in each group is determined by a control signal supplied to the multiplexer (52).

15. The arrangement according to claim 14, characterized by a counter (61) for counting the consecutive phases in which in each case a mean value is formed, and by a decoder (62) which from the count of the counter (61) forms a control signal in accordance with a predetermined function, which control signal determines the number of outputs in each group.

16. The arrangement according to any one of claims 7 to 15, characterized by an interpolator (56) which receives the value of the floating threshold profile (G) filtered out by the minimum value filter (55) for a certain instant, and the value filtered out for a preceding instant, and produces a certain number of intermediate values by linear interpolation.

17. The arrangement as claimed in claim 16, characterized in that the number of intermediate values is adjustable by a control signal supplied to the interpolator (56).

18. The arrangement according to claims 15 and 17, characterized in that the number of intermediate values is determined by the control signal formed by the decoder (62).

19. The arrangement according to claim 18, characterized in that between the interpolator (56) and the output memory (58) a multiplexer (57) is arranged which supplies the values delivered by the interpolator (56) to a respective group of parallel inputs of the output memory (58).

20. The arrangement according to claim 19, characterized in that the number of the inputs in each group is adjustable by a control signal supplied to the multiplexer (57).

21. The arrangement according to claims 15 and 20, characterized in that the number of inputs in each group is determined by the control signal formed by the decoder (62).

**Revendications**

1. Procédé de télémétrie basé sur le principe de la durée de parcours d'une impulsion, selon lequel, dans des cycles de mesure consécutifs, une impulsion (S) est émise respectivement pendant une phase d'émission et pendant une phase de réception faisant suite à cette phase d'émission le signal de réception est mémorisé sous la forme d'un profil d'écho (E), selon lequel l'écho utile (N) réfléchi sur l'objet à mesurer est obtenu à partir d'au moins un profil d'écho (E) mémorisé et la distance de l'objet est déterminée à partir de l'intervalle de temps passé entre l'émission de l'impulsion (S) et la réception de l'écho utile (N), tandis que, pour supprimer des signaux parasites (P), un profil de seuil variable (G) est formé à partir du profil d'écho mémorisé (E), en débarrassant par lissage le profil d'écho (E) de fluctuations, de telle sorte que le résultat est une courbe à chute monotone, et selon lequel ledit profil de seuil variable (G) est combiné à un profil de seuil fixe (F) adapté à l'environnement de l'opération de mesure, en vue de supprimer des signaux parasites récurrents, le profil de seuil résultant (H) étant utilisé lors de chaque évaluation de profils d'écho (E) mémorisés, caractérisé en ce que les valeurs du profil de seuil variable (G) sont formées, pour des instants consécutifs du cycle de mesure, à partir de valeurs du profil d'écho (E) mémorisé, et que pour obtenir la courbe à chute monotone, pour chaque valeur du profil de seuil variable (G) correspondant à un instant du cycle de mesure, la valeur formée pour cet instant est utilisée, si elle est inférieure ou égale à la valeur utilisée pour l'instant précédent, et dans le cas contraire, la valeur utilisée pour l'instant précédent est utilisée.

2. Procédé selon la revendication 1, caractérisé en ce que la valeur moyenne de plusieurs valeurs consécutives du profil d'écho (E) est formée pour le lissage du profil d'écho (E) pour chaque valeur du profil de seuil variable (G).

3. Procédé selon la revendication 1, caractérisé en ce que des valeurs intermédiaires distantes entre elles sont déterminées pour le profil de seuil variable (G) à partir du profil d'écho (E), et que les valeurs dudit profil (G) situées entre ces valeurs intermédiaires sont formées par interpolation linéaire.

4. Procédé selon la revendication 3, caractérisé en ce que les distances entre les valeurs intermédiaires sont augmentées de manière continue au cours du cycle de mesure.

5. Procédé selon la revendication 4, caractérisé en ce que les distances entres les valeurs intermédiaires sont augmentées de manière continue d'un facteur 2 au cours du cycle de mesure.

6. Procédé selon l'une des revendications 3 à 5, caractérisé en ce que pour former chaque valeur intermédiaire, la valeur moyenne de plusieurs valeurs consécutives du profil d'écho (E) est formée.

7. Dispositif pour la mise en oeuvre du procédé conforme à l'une des revendications précédentes, qui comporte un dispositif d'émission-réception (12, 13, 14, 15) pour l'émission d'une impulsion d'émission (S) dans chaque cycle de mesure, et pour la réception des signaux d'écho générés par chaque impulsion émettrice, qui comporte un circuit (20) de traitement de signaux raccordé au dispositif d'émission-réception (12, 13, 14, 15), doté d'une mémoire (24) des profils d'écho dans laquelle est mémorisé au moins un profil d'écho (E) correspondant au signal de réception délivré pendant un cycle de mesure par le dispositif d'émission-réception (12, 13, 14, 15), qui comporte un circuit d'évaluation (25) qui détermine l'écho utile (N) réfléchi sur l'objet à mesurer à partir du profil d'écho (E) mémorisé dans la mémoire (24) et détermine la distance de l'objet à partir de l'intervalle de temps entre l'émission de l'impulsion d'émission (S) et la réception de l'écho utile (N), et qui comporte un circuit (28) de profil de seuil variable pour la formation d'un profil (G) de seuil variable lissé et à chute monotone à partir d'un profil d'écho mémorisé (E), caractérisé en ce que le circuit (28) de profil de seuil variable contient un filtre (35, 55) des valeurs minimales, lequel compare chaque. valeur du profil de seuil variable (G) formée pour un instant déterminé du cycle de mesure à la valeur formée pour l'instant précédent, et qui fournit la plus petite des deux valeurs comparées, ou bien, en cas d'égalité, cette valeur égale afin de constituer la valeur du profil (G) de seuil variable pour cet instant.

8. Dispositif selon la revendication 7, caractérisé en ce que le filtre de valeur minimale (35, 55) contient une mémoire (43) pour la mémorisation d'une valeur du profil (G) de seuil variable, un comparateur (41) et un multiplexeur (42) piloté par le signal de sortie du comparateur (41), que le comparateur (41) et le multiplexeur (42) reçoivent respectivement sur une première entrée (41a, 42a) une valeur du profil (G) de seuil variable formée par des circuits montés en amont, et à une deuxième entrée (41b, 42b) la valeur du profil (G) de seuil variable mémorisée dans la mémoire (43), que le signal de sortie du comparateur (41) pilote le multiplexeur (42) en fonction du résultat de la comparaison, de telle manière que ce dernier fournit à sa sortie la plus petite des deux valeurs comparées ou la valeur égale, la valeur fournie par le multiplexeur (42) est mémorisée dans la mémoire (43) du filtre de valeur minimale (35 ; 55).

9. Dispositif selon la revendication 7 ou 8, caractérisé en ce que le circuit (28) du profil de seuil variable contient une mémoire de sortie (36 ; 58) dans laquelle sont mémorisées les valeurs du profil de seuil variable (G) délivrées par le filtre (35 ; 55) de valeur minimale en des endroits de mémorisation associés à des instants du cycle de mesure.

10. Dispositif selon l'une des revendications 7 à 9, caractérisé en ce que le circuit (28) du profil de seuil variable contient une mémoire d'entrée (31 ; 51) pour la mémorisation d'un profil d'écho (E), ainsi qu'un circuit (32, 33, 34 ; 52, 53, 54) pour la formation de la valeur moyenne de plusieurs valeurs du profil d'écho (E) mémorisées dans la mémoire d'entrée (31 ; 51), dont le signal de sortie représentant la valeur moyenne est amené à l'entrée du filtre de valeur minimale (35 ; 55).

11. Dispositif selon la revendication 10, caractérisé en ce que le circuit (32, 33, 34 ; 52, 53, 54) pour la formation de la valeur moyenne contient un sommateur (33 ; 53) qui reçoit à ses entrées un certain nombre de valeurs du profil d'écho (E) et émet à sa sortie un signal de sortie représentant la somme de ces valeurs, ainsi qu'un diviseur (34 ; 54) qui reçoit le signal de sortie du sommateur (33 ; 53) et divise la somme par le nombre des valeurs à partir desquelles cette somme a été formée.

12. Dispositif selon la revendication 11, caractérisé en ce qu'entre la mémoire d'entrée (31) et le sommateur (33) est intercalée une mémoire intermédiaire (32) dans laquelle sont transférées à partir de la mémoire d'entrée (31) les valeurs du profil d'écho (E) qui doivent subir la sommation.

13. Dispositif selon la revendication 11, caractérisé en ce qu'entre la mémoire d'entrée (51) et le sommateur (53) est intercalé un multiplexeur (52) qui transfère respectivement les signaux de sortie d'un groupe de sorties de la mémoire d'entrée (51) vers les entrées du sommateur (53).

14. Dispositif selon la revendication 13, caractérisé en ce que le nombre des sorties dans chaque groupe est réglable par un signal de commande amené au multiplexeur (52).

15. Dispositif selon la revendication 14, caractérisé par la présence d'un compteur (61) pour le comptage des phases consécutives dans lesquelles est formée respectivement une valeur moyenne, et par la présence d'un décodeur (62), lequel forme, à partir de l'état de comptage du compteur (61), selon une fonction prescrite, le signal de commande qui détermine le nombre des sorties dans chaque groupe.

16. Dispositif selon l'une des revendications 7 à 15, caractérisé par la présence d'un interpolateur (56) qui reçoit la valeur du profil (G) de seuil variable filtrée par le filtre de valeur minimale (55) pour un instant déterminé, et la valeur filtrée pour un instant précédent, et qui, par interpolation linéaire, produit un nombre déterminé de valeurs intermédiaires.

17. Dispositif selon la revendication 16, caractérisé en ce que le nombre des valeurs intermédiaires est réglable par un signal de commande amené à l'interpolateur (56).

18. Dispositif selon les revendications 15 et 17, caractérisé en ce que le nombre des valeurs intermédiaires est déterminé par le signal de commande formé par le décodeur (62).

19. Dispositif selon la revendication 18, caractérisé en ce qu'entre l'interpolateur (56) et la mémoire de sortie (58) est intercalé un multiplexeur (57) qui amène les valeurs délivrées par l'interpolateur (56) à respectivement un groupe d'entrées parallèles de la mémoire de sortie (58).

20. Dispositif selon la revendication 19, caractérisé en ce que le nombre des entrées dans chaque groupe est réglable par un signal de commande amené au multiplexeur (57).

21. Dispositif selon les revendications 15 et 20, caractérisé en ce que le nombre des entrées dans chaque groupe est déterminé par le signal de commande formé par le décodeur (62).

# Fig.1

EP 0 573 034 B1

## Fig. 2

## Fig. 3

Fig.4

Fig.5

## Fig. 6

## Fig. 7

# Fig. 8